# FASCICULE DE BREVET EUROPEEN

(11) **EP 3 451 139 B1**
(45) Date de publication et mention de la délivrance du brevet: **04.01.2023**
(21) Numéro de dépôt: 18189558.2
(22) Date de dépôt: 17.08.2018
(51) Int. Cl.: G06F 3/039, G06F 3/04886, G06F 21/83, G09B 21/00

(54) **DISPOSITIF DE SAISIE SUR UNE SURFACE TACTILE ET PROCÉDÉ CORRESPONDANT**
EINGABEVORRICHTUNG FÜR EIN TOUCHSCREEN UND ENTSPRECHENDES VERFAHREN
INPUT DEVICE FOR A TOUCHSCREEN AND CORRESPONDING METHOD

(30) Priorité: 31.08.2017 FR 1758053
(43) Date de publication de la demande: 06.03.2019
(73) Titulaire: Banks and Acquirers International Holding, 75015 Paris (FR)
(72) Inventeur: BERTHIAUD, Olivier, 07130 Cornas (FR); CARABELLI, André, 07130 Saint-Peray (FR); PAVAGEAU, Stéphane, 26600 La Roche de Glun (FR)
(74) Mandataire: Germain Maureau

(56) Documents cités:
- DE-A1-102012 100 717
- US-A1- 2011 227 871
- US-A1- 2011 248 947
- US-A1- 2015 205 370
- US-A1- 2015 286 294

## Description

### 1. Domaine

La présente technique se rapporte au domaine des dispositifs de saisie de données. Plus précisément, la présente technique concerne un dispositif de saisie destiné à être apposé sur une dalle tactile. La présente technique s'applique en particulière à la saisie de codes confidentiels ou de codes d'identification personnels sur une surface tactile, par exemple pour les personnes malvoyantes.

### 2. Art Antérieur

Les écrans tactiles sont largement utilisés pour saisir des données au sein de systèmes informatisés de traitement de données. Par exemple, les téléphones mobiles, les ordinateurs, tablettes, ou encore les terminaux de paiement et les distributeurs automatiques de billets (DAB) disposent d'écrans tactiles pour faciliter la saisie des données par les utilisateurs.

Pour effectuer une saisie, un utilisateur peut toucher un ou plusieurs caractères sur un clavier virtuel affiché sur l'écran tactile, en utilisant un doigt ou un stylet. Il n'est ainsi plus nécessaire de disposer un clavier physique pour saisir des textes. Cependant, la saisie des textes avec un clavier virtuel présente des inconvénients, notamment pour les personnes malvoyantes, mais également pour les personnes technophobes ou peu coutumiers des usages numériques. Notamment, à la différence des claviers physiques, les claviers virtuels sont affichés sur un écran plat et ne permettent pas à certains utilisateurs de se repérer spatialement sur les touches virtuelles.

Cet inconvénient est en particulier gênant pour les terminaux de paiement ou des distributeurs automatiques de billets (DAB) qui disposent d'un écran tactile. En effet, lorsqu'un utilisateur utilise sa carte bancaire pour effectuer un paiement ou pour retirer des billets, il doit saisir son code PIN pour s'authentifier. Il n'est pas possible pour une personne malvoyante de saisir son code PIN sur un clavier virtuel affiché sur un écran tactile.

Une directive européenne en cours de rédaction oblige les commerçants et banquiers à fournir une solution pour les personnes malvoyantes. La solution de l'état de à technique consiste à fournir toujours un clavier physique électronique relié à un terminal de paiement, même si un clavier virtuel est disponible sur l'écran tactile. Le coût de fabrication des terminaux de paiement ou des distributeurs automatiques de billets (DAB) est ainsi augmenté, sans que la solution soit réellement intéressante, notamment des points de vue technique et esthétique. En effet, le clavier physique destiné aux personnes malvoyantes doit être sécurisé pour éviter le piratage, augmentant le cout et ce clavier n'est généralement pas esthétiquement intégré dans la solution tactile.

Par ailleurs, en sus des problématiques esthétiques ou des problématiques de coût, il existe également une problématique importante de sécurité. En effet, à la différence d'un utilisateur standard, les personnes vulnérables, comme les personnes malvoyantes, doivent souvent solliciter l'aide de personnes qu'elles ne connaissent pas nécessairement. Ceci est une grande source de stress pour ces personnes. Lorsqu'il s'agit par exemple de taper un code PIN, et donc de révéler une information sensible, il est nécessaire de s'assurer que la personne dont on sollicite éventuellement l'aide ne va pas tenter de conserver cette information pour une utilisation frauduleuse.

De la même manière, de nombreux utilisateurs ne sont pas en mesure de détecter de combattre efficacement les applications et logiciels espions qui sont installés sur leurs terminaux de communication. Or de plus en plus de terminaux de communication sont utilisés à des fins de saisie d'informations confidentielles et notamment d'informations de paiement (code PIN, comptes bancaires, etc.). Pour contrer ces problèmes de fraude, les solutions existantes proposent un affichage aléatoire du clavier virtuel ; dans un tel affichage aléatoire, les touches du clavier sont disposées aléatoirement et l'utilisateur doit identifier les touches pour pouvoir saisir ses données confidentielles (par exemple le code PIN). Une application sécurisée, installée sur le terminal de communication, se charge de réaliser la correspondance entre les zones de saisie de l'utilisateur et les caractères correspondant. On comprend bien qu'une telle manière de faire n'est pas adaptée pour de nombreux utilisateurs, et notamment pour les personnes malvoyantes ou plus généralement pour les personnes en rupture par rapport à la numérisation de ces opérations de saisies sur écran tactile.

US 2011/248947 A1 divulgue un dispositif de saisie apposé sur une dalle tactile. US 2015/286294 A1 et US 2011/227871 A1 divulguent des interfaces interactives à travers lesquelles des dispositifs apposés sur des dalles tactiles sont identifiés.

Il existe ainsi un besoin de fournir une solution permettant aux utilisateurs de saisir des données confidentielles sur des dispositifs (terminal de paiement, terminal de communication par exemple) comprenant un écran tactile, en assurant la sécurité des données saisies, tout en réduisant le coût de cette solution et conservant l'aspect esthétique engendré par l'utilisation d'écran tactiles.

### 3. Résumé

L'invention permet de résoudre au moins partiellement les problèmes de l'art antérieur. L'invention permet notamment à tout type d'utilisateur d'effectuer une saisie de données sur écran tactile, et ce de manière simple, ergonomique et sécurisée. Plus particulièrement, l'invention se rapporte à un dispositif de saisie de données destiné à être apposé sur une dalle tactile d'un terminal. Selon l'invention, un tel dispositif de saisie comprend une plaque globalement parallélépipédique, ladite plaque comprenant une face supérieure, dont au moins une partie comprend une matrice de zones de saisie formant clavier, et une face inférieure, ladite face inférieure comprenant, pour chaque touche dudit clavier en face supérieure, au moins une zone de contact électriquement reliée à une touche correspondante à la face supérieure.

Selon un mode de réalisation particulier, le dispositif de saisie comprend des moyens de sorte qu'une pression d'une touche du clavier provoque une production d'un motif géométrique correspondant à cette touche sur ladite dalle tactile.

Ainsi, le terminal sur lequel le dispositif est apposé est à même de détecter l'appui sur une touche du clavier dessiné ou reproduit sur la face supérieure. Il est donc possible d'associer, à une touche en face supérieure, au moins trois zones de contact en face inférieure pour produire un motif géométrique unique. Ainsi, le dispositif peut être positionné librement sur la surface tactile du terminal car on assure que quelle que soit la position et l'orientation retenue, chaque touche disposera d'un motif géométrique unique associé et donc pourra être reconnue par le terminal. On augmente ainsi grandement la sécurité de la saisie des codes, par exemple des codes confidentiels, notamment par des personnes malvoyantes.

Selon un mode de réalisation particulier, le dispositif comprend en outre au moins une zone de contact chargée électriquement, dite zone de détection, reliée à un élément conducteur, lequel est situé au moins en partie sur le pourtour de la face supérieure dudit dispositif.

Ainsi, en plus d'une détection des appuis de touche réalisés en face supérieure, il est possible de détecter la pose du dispositif sur l'écran tactile. Lorsqu'il détecte la pose du dispositif de saisie sur l'écran tactile, le terminal peut alors mettre en oeuvre une procédure de particulière, décrite par la suite, permettant de détecter l'orientation et la position du dispositif de saisie.

Selon la présente invention, le dispositif comprend trois zones de détection, réparties sur le pourtour de la face inférieure dudit dispositif, de sorte à former un triangle non isocèle, dit triangle de détection.

Ainsi, grâce à ces trois zones de détection, le terminal, qui connaît la géométrie de ce triangle, est à même de détecter la position et l'orientation du dispositif de manière automatique ou semi-automatique.

Selon une caractéristique particulière, chaque touche dudit clavier en face supérieure comprend au moins trois zones de contact chargées électriquement, qui peuvent former avec le triangle de détection, une forme unique associée spécifiquement à ladite touche.

Selon un mode de réalisation particulier, chaque touche dudit clavier en face supérieure comprend trois zones de contact chargées électriquement, formant, en face inférieure, une forme géométrique unique associée spécifiquement à ladite touche.

Ainsi, chaque touche du clavier comprend, intrinsèquement, une signature. Cette signature est constituée au moins des trois points de contact avec la dalle tactile du terminal. Lorsque le dispositif de saisie est posé sur une surface tactile, et plus particulièrement une surface tactile capacitive, la couche de la surface tactile qui accumule les charges transmet certaines de ces charges aux trois points de contact. Le terminal est alors en mesure de détecter que ces points de contacts correspondent à une géométrie particulière représentative de la touche associée. Le terminal peut alors associer cette géométrie à une touche donnée : par exemple tel triangle ou tel quadrilatère est associé à la touche 1, tandis que tel autre triangle ou quadrilatère est associé à la touche 2, etc.

Selon un mode de réalisation particulier, le dispositif est constitué de matière plastique transparente.

Ainsi le dispositif de saisie est sécuritaire : en effet, du fait de la transparence du dispositif, il n'est pas possible d'y adjoindre des mécanismes frauduleux de surveillance des saisies. En effet, si de tels mécanismes étaient ajoutés, ils seraient immédiatement détectés du fait de la transparence du dispositif de saisie de données.

Selon un mode de réalisation particulier, la plaque globalement parallélépipédique à une épaisseur comprise entre un et trois millimètres, au sein de laquelle des zones de moindre épaisseur sont pratiquées au niveau des touches.

Selon une caractéristique particulière, une liaison électrique entre une touche de la surface supérieure et une zone de contact de la surface inférieure est assurée par l'intermédiaire d'une encre conductrice.

Selon un mode de réalisation particulier, l'ensemble de touche formant clavier est représentatif d'un clavier de saisie d'un code confidentiel sur un terminal de paiement.

Selon un autre aspect, l'invention se rapporte également à un procédé de saisie de données sur une dalle tactile d'un terminal. Un tel procédé de saisie comprend :
- une étape de pose, sur un écran tactile dudit terminal, d'un dispositif de saisie de données tel que précédemment décrit ;
- une étape optionnelle de détection, par le terminal, de la pose dudit dispositif de saisie de données ; et
- une étape de saisie, par un utilisateur, de données sur la surface dudit dispositif de saisie de données.

Selon une caractéristique particulière, le procédé de saisie de données comprend, postérieurement à l'étape de détection, une étape de basculement dans un mode de saisie adapté audit dispositif de saisie de données.

L'invention se rapporte également à un système de saisie de données comprenant un terminal muni d'un écran tactile et un dispositif de saisie de donnée tel que décrit précédemment.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 illustre un dispositif de saisie de données selon un premier mode de réalisation de l'invention ;
- la figure 2 illustre un dispositif de saisie de données selon un deuxième mode de réalisation de l'invention ;
- la figure 3 illustre une matrice de zones de contact selon l'invention ;
- la figure 4 illustre un mode de réalisation de la liaison électrique entre la surface inférieure et la surface supérieure.

### 5. Description détaillée

### 5.1. Principe général

La technique proposée concerne un dispositif physique de saisie de données destiné à être apposé à un endroit aléatoire sur un écran tactile d'un terminal. L'orientation du dispositif peut également être aléatoire sur l'écran tactile. Un utilisateur peut utiliser le dispositif de saisie pour entrer des caractères sur l'écran tactile d'un terminal. Le dispositif de saisie selon la technique proposée comprend une plaque comprenant une surface supérieure et une surface inférieure. La face supérieure du dispositif de saisie de données comprend une matrice de zones de saisie formant clavier, comprenant un ensemble de touches. La plaque peut être réalisée en plastique, en silicone ou autres matériaux permettant de respecter les normes en vigueur des claviers notamment pour personnes malvoyantes, comprenant par exemple un relief du marquage des touches. En fonction des modes de réalisation, la matrice peut être transparente sur une zone ou la totalité, ou ajourée, pour permettre l'affichage d'information depuis l'écran, et permettre une détection d'éventuels dispositifs espions non autorisés.

En quelque sorte, l'invention se rapporte à un dispositif d'interfaçage entre une dalle de tactile, permettant la saisie de données, et un utilisateur, l'utilisateur étant à même de repérer, sur le dispositif d'interfaçage, des touches correspondant à des caractères à saisir.

Selon l'invention, des matériaux conducteurs sont également intégrés pour permettre l'indexation de cette matrice, de façon intelligente, comme cela est explicité par la suite.

Les dimensions et la disposition des touches de la matrice de zones de saisie peuvent être préalablement connues par les personnes malvoyantes pour que celles-ci puissent se repérer sur la matrice de zones de saisie. La matrice de zones de saisie peut également comprend des motifs embossés ou creusés pour que les personnes malvoyantes puissent se repérer, même sans connaissances préalables des dimensions et des dispositions de la matrice de saisie.

Le principe général de la technique proposée consiste à disposer d'au moins une zone de contact chargée électriquement (ou conductrice) sur la face inférieure de la plaque. Une zone de contact peut consister en une pièce métallique ou un dessin réalisé avec des encres conductrices ou d'autres moyens. L'application (sécurisée ou non) de saisie du terminal peut ainsi effectuer une association entre les touches de la matrice de zones de saisie du dispositif de saisie de données et les caractères correspondants, association qui est réalisée à l'aide de la position et/ou les caractéristiques géométriques de la ou des zone(s) de contact chargée(s) électriquement (ou zones de contact conductrices).

Selon un premier mode de réalisation de la technique proposée, décrit plus précisément ci-après, trois zones de contact (chargées électriquement ou conductrices) permettent au terminal de détecter la position du dispositif de saisie de données lorsqu'il est posé sur l'écran tactile. Le terminal peut enregistrer (ou connaître) préalablement la position de la matrice de zones de saisie par rapport à la position de la ou des zones de contact chargées électriquement, et les dimensions et les dispositions des touches de la matrice de zones de saisie (par exemple par l'intermédiaire d'une application de saisie spécifique au dispositif de l'invention). L'écran tactile peut détecter le contact d'un doigt ou d'un stylet sur une touche de saisie de la matrice de zones de saisie. Le caractère correspondant à la touche de saisie peut être identifié par le terminal selon la position des zones de contact chargée électriquement.

Selon un deuxième mode de réalisation de la technique proposée, les zones de contact (chargées électriquement ou conductrices) définissent des patterns différents pour chaque touche du dispositif de saisie. Dès que l'on appuie sur une touche sur la matrice de zones de saisie de données, une forme géométrique (pattern) (un triangle par exemple) unique est actionné en face inférieure du dispositif de saisie.

Le terminal peut identifier le caractère saisi à partir du pattern actionné sur l'écran du terminal : chaque forme géométrique étant unique, l'application du terminal est capable d'associer chaque forme géométrique unique à un caractère spécifique. Cette solution a l'avantage de ne présenter, à l'utilisateur, que des surfaces plastiques, et d'avoir des zones de contact (chargées électriquement ou conductrice) en face cachée. En outre le dispositif est très peu sensible à l'usure. Le dispositif est autonome, ne nécessite pas de batterie ou de composants électronique. Il agit comme une interface physique (surcouche tactile) entre l'écran tactile du terminal et le doigt de l'utilisateur.

### 5.2. Premier mode de réalisation de l'invention

### 5.2.1. Dispositif de saisie de données

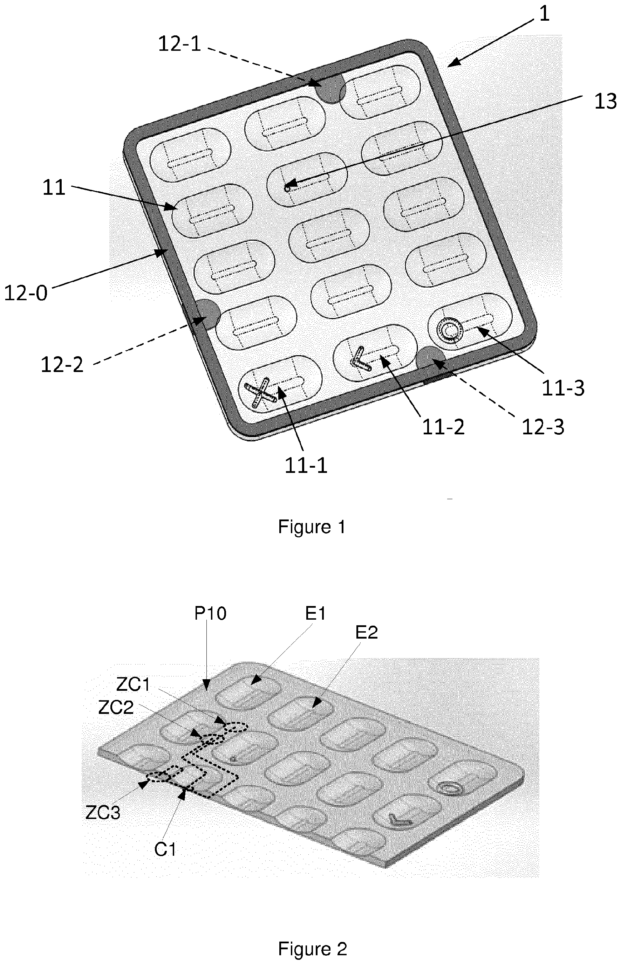

On décrit en relation avec la figure 1, un premier mode de réalisation du dispositif de saisie de données selon l'invention. Comme illustré dans la figure 1, le dispositif de saisie de données comprend une plaque 1 destiné à être apposé sur une dalle tactile d'un terminal de paiement. La plaque 1 globalement rectangulaire est constituée de matière plastique transparente et comprend une face supérieure structurée et une face inférieure globalement plane (destinée à être posée sur une dalle tactile). La surface supérieure comprend une matrice de zones de saisie formant clavier. La matrice de zones de saisie comprend un ensemble de touches de saisie rectangulaires 11 comprenant des touches numérique et trois touches fonctionnelles 11-1, 11-2 et 11-3. Les touches sont sous forme des creux formés sur la face supérieure de la plaque. Ce qui permet d'une part de localiser le doigt et d'autre part d'approcher de la dalle tactile. Un téton de repérage 13 sur une touche au centre de la matrice afin de faciliter le repérage du clavier.

La face inférieure de la plaque 1 comprend trois zones de contact (conductrices dans le cas présent) 12-1, 12-2 et 12-3 sous forme de trois rondelles métalliques. Les trois rondelles métalliques sont reliées par un anneau métallique 12-0 cerclant la plaque 1. La position (et l'orientation et la taille) du dispositif de saisie peut être déterminée lors de la pose de la plaque sur l'écran, lorsque l'utilisateur touche l'anneau métallique 12-0 : un contact électrique se produit alors entre le doigt de l'utilisateur et l'anneau métallique 12-0 et se poursuit jusqu'aux trois zones de contact (qui forment le triangle de détection). Plusieurs configurations et donc plusieurs types de triangles de détection peuvent être mis en oeuvre. Le triangle de détection, cependant, n'est pas isocèle, afin justement de permettre une détection de la position et de l'orientation du dispositif.

Selon une solution alternative, les trois zones de contact peuvent être réalisées par des encres conductrices, en face inférieure, et reliées par des via, à la face supérieure, qui serait également conductrice (par exemple, via une encre transparente (ITO ou graphène), ou via un motif fin ou quadrillage d'encre, à l'instar des dalles tactiles elles-mêmes)). Ainsi, dès que l'utilisateur appuie sur le clavier, il actionne non seulement la touche en question, mais également les trois zones de contact permettant de détecter l'orientation et la position du clavier.

Quelle que soit la solution retenue, lorsqu'il est envisagé de disposer de plusieurs types de matrices différentes, tant en taille qu'en fonctionnalité ou en nombre de touches, l'utilisation des zones de contact périphériques permet de répondre à ces différentes configuration du dispositif, par exemple en disposant de données de configuration au sein de l'application du terminal.

Ainsi, dans ce type de mode de réalisation, la face inférieure de la plaque comprend par exemple trois zones de contact : les zones sont positionnées sur le pourtour du dispositif, de sorte à former un triangle, unique, connu de l'application de saisie installée sur le terminal, triangle qui permet à cette application de déterminer la position et l'orientation du dispositif de saisie et ce quelle que soient les caractéristiques de taille du dispositif, ce qui permet d'avoir des dispositifs de tailles différentes, par exemple en fonction de besoins de saisie ou de caractéristiques liées aux utilisateurs.

Le terminal de communication comprend une application ou un module spécifique qui permet d'identifier ce triangle et donc de connaître la position et l'orientation du dispositif de saisie par rapport à l'écran (et éventuellement son type). De cette manière, lorsque l'utilisateur saisit des informations (par exemple un code PIN) à l'aide du dispositif de saisie, le terminal est en mesure de reconnaitre les caractères saisis (quelle que soit la position et l'orientation du dispositif) et ce sans même avoir besoin d'afficher le clavier virtuel sur l'écran. Le dispositif de saisie de l'invention, dans ce premier mode de réalisation, permet donc bien d'augmenter le niveau de sécurisation de la saisie d'une information sur un écran tactile, pour tous les utilisateurs (et pas uniquement pour les personnes malvoyantes).

Alternativement, dans une variante non revendiquée, le terminal de communication ne reconnaît pas la position et/ou l'orientation du dispositif. En revanche, chaque saisie produit, sur la dalle tactile du terminal, un motif géométrique particulier, déterminé d'une part à l'aide des zones de contact disposées sur le pourtour de la face inférieure (deux, trois ou plus de zones de contact) et d'autre par la touche saisie (c'est-à-dire l'endroit du clavier où l'utilisateur a posé son doigt). Lorsque deux zones de contact sont présentes sur le pourtour de la face inférieure, chaque saisie produit, sur la dalle tactile, un triangle unique : l'application de saisie peut associer ce triangle à un caractère, un chiffre ou une fonction donnée. Lorsque trois zones de contact sont présentes sur le pourtour de la face inférieure, chaque saisie produit, sur la dalle tactile, un quadrilatère unique : l'application de saisie peut associer ce quadrilatère à un caractère, un chiffre ou une fonction donnée. Il est bien entendu possible de multiplier les zones de contact et également envisageable de n'utiliser qu'une seule zone de contact (sur le pourtour de la face supérieure) pour la détection du caractère saisi. Dans ce cas, la forme géométrique détectée est un segment de droite d'orientation et de longueur prédéterminée.

### 5.2.2. Procédé de saisie de données

On décrit ci-dessous un procédé de saisie de données sur une dalle tactile d'un terminal en utiliser le dispositif de saisie de données pour les personnes malvoyantes selon le premier mode de réalisation. Le procédé comprend :
- une étape de pose, sur un écran tactile du terminal, d'un dispositif de saisie de données pour les personnes malvoyantes;

Le dispositif peut être apposé sur une zone aléatoire de l'écran tactile.
- une étape de détection, par le terminal, de la pose du dispositif de saisie de données; et, pouvant provoquer le passage en mode « aveugle » avec latence et/ou sans affichage du clavier à l'écran et/ou avec retour haptique (vibreur ou impulsion) ; l'étape de détection comprend une étape de détections des positions des zones de contact du dispositif de saisie. ; selon les positions détectées, le terminal peut déterminer les positions des touches dans la matrice de zones de saisie ; alternativement, lorsque l'utilisateur touche une touche du dispositif de saisie de données, le terminal peut déterminer le caractère ou l'action correspondant à la touche par la détection d'un motif géométrique (triangle, quadrilatère, etc.) ;
- une étape de saisie, par un utilisateur, de données sur la surface du dispositif de saisie de données.

L'étape consistant à passer en mode « aveugle » est mise en oeuvre par le terminal de communication, par l'intermédiaire de l'application et/ou du module de saisie. Le passage en mode aveugle, commun à tous les modes de réalisation, permet notamment de ne pas afficher de clavier virtuel sur l'écran du terminal (et donc de ce fait augmente la sécurité), tout en assurant que les saisies effectuées soient correctes : le retour haptique peut être mis en oeuvre pour signaler la saisie, une latence peut être mise en oeuvre entre la saisie de deux caractères pour éviter les erreurs, etc.

### 5.3. Deuxième mode de réalisation de l'invention

### 5.3.1. Dispositif de saisie de données

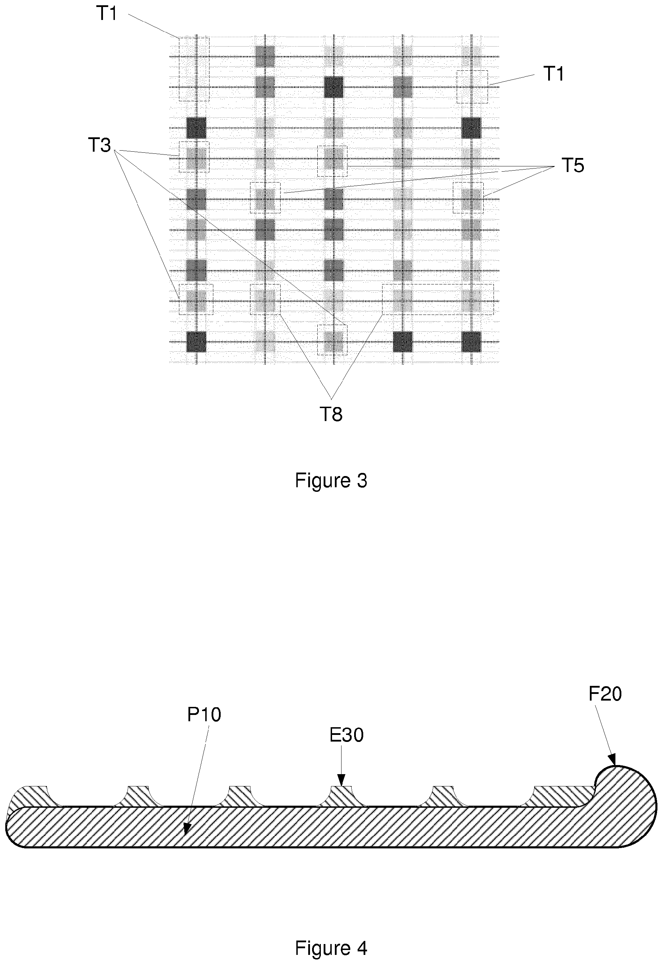

Dans un deuxième mode de réalisation, décrit en relation avec les figures 2 et 3, le dispositif de saisie de données selon l'invention se présente sous la forme d'une plaque transparente P10 (par exemple fabriquée par moulage ou injection), comprenant des évidements (E1, E2, etc.) (zones de moindre épaisseur) au niveau des emplacements matérialisant des touches.

Dans ce deuxième mode de réalisation, les zones de contact sont spécifiques à chaque touche du clavier. Plus particulièrement, dans ce mode de réalisation, chaque touche de la face supérieure dispose d'une ou plusieurs connexions spécifiques avec la face inférieure (un exemple est donné avec le circuit C1). En d'autres termes, dans ce mode de réalisation, une touche est reliée électriquement à au moins trois zones de contact (ZC1, ZC2, ZC3 par exemple) sur la face inférieure. Cette pluralité de zones de contact sur la face inférieure permet, lorsque l'utilisateur pose son doigt sur une touche de la face supérieure, d'actionner une série de zones de contacts (par établissement d'un contact électrique entre le doigt et la dalle tactile, les électrons circulant par l'intermédiaire du circuit, par exemple C1). Cette série de zones de contact, spécifique à cette touche, dessine (active) des points sur la dalle tactile (par transfert d'électrons entre la face supérieure et la face inférieure) et dessine donc une géométrie spécifique à cette touche sur la dalle tactile.

Par exemple, lorsque trois zones de contact sont associées à une touche (trois zones de contact par touche donc), l'appui, par l'utilisateur, sur l'une des touches entraine la formation de trois contacts simultanés sur la dalle tactile. Ces trois contacts simultanés sont représentatifs d'une forme géométrique (un triangle en l'occurrence) unique associé à cette touche (caractère, chiffre) par l'application de saisie du terminal. Chaque forme géométrique associée à chaque caractère étant unique, l'application de saisie sait reconnaître le caractère sélectionné par l'utilisateur lors de l'apposition de son doigt sur la touche. Ce qui vient d'être décrit pour trois contacts est évidemment valable pour un nombre supérieur de contacts, la seule condition étant qu'une forme géométrique unique est produite par chaque appui.

La figure 3 expose une architecture de zones de contact présentant une configuration unique de zones de contact associées à un caractère d'un clavier numérique de saisie de données de type code PIN pour le paiement par carte bancaire. Quelques zones ont été regroupées à titre illustratif pour les besoins du commentaire de cette figure : T1, T3, T5, T8.

Comme on peut le constater sur cet exemple de la figure 3, chaque zone groupe de zone produit une forme différente (triangle ou segment de droite) qui est interprétable, par une application de saisie du terminal, comme un caractère particulier de clavier.

Ce mode de réalisation (et ses nombreuses variantes) a l'avantage de ne présenter, à l'utilisateur en face supérieure, que des surfaces de saisie, et d'avoir des zones de contact (conductrices) en face inférieure cachée. La liaison électrique entre les touches de la face supérieure et les zones de contact de la face inférieure peut être mise en oeuvre de plusieurs manières différentes. D'une manière générale, le dispositif se présente sous la forme d'une plaque en plastique transparent (d'épaisseur de 1 à 1,5 millimètre, pour une meilleure raideur). Il s'agit par exemple d'une plaque moulée, présentant des zones de plus faible épaisseur, permettant de localiser le doigt, et d'approcher de la dalle tactile. La surface supérieure est par exemple conductrice, et connectée à la surface inférieure, pour permettre de localiser comme décrit précédemment.

Un autre mode de réalisation consiste à utiliser de plaque de verre, par exemple plusieurs couches de verre empilé, comprenant des épaisseurs différentes pour définir les emplacements des touches, couplé à l'utilisation d'un ou de plusieurs films de type PET *(« polyethylene terephthalate »).* Comprenant notamment des zones plus ou moins conductrices pour permettre la conductivité électrique entre la face supérieure et la face inférieure.

Dans un premier mode de mise en oeuvre, la conduction électrique entre les touches de la face supérieure et les zones de contact de la face inférieure est réalisée en utilisant un circuit électrique vertical traversant la plaque, de la touche vers la face inférieure. Ces circuits peuvent être réalisés par injection ou par moulage au moment de la fabrication de la plaque. La plaque elle-même peut se présenter sous la forme d'un assemblage de plaques individuelles (une plaque supérieure, une paque centrale, une plaque inférieure), dont au moins une, par exemple la plaque centrale, comprend les circuits imprimés transparent (par exemple à base d'encre conductrice transparente) permettant de réaliser un contact électrique entre la plaque supérieure et la plaque inférieure par exemple. D'autres technique, basées sur des vias (micro-via) peuvent également être mise en oeuvre. Quelle que soit la technique employée, une connexion est créée entre l'emplacement de la touche en face supérieure du dispositif de saisie et une pluralité de zones de contacts de la face inférieure.

Dans un deuxième mode de mise en oeuvre, présenté en relation avec la figure 4 (vue de coupe), le dispositif comprend une plaque en matière transparente P10 (verre, plastique), enveloppée au moins en partie par un film ITO (de l'anglais pour « *Indium tin oxide »*) F20. Le film ITO comprend les tracés des circuits (figure 3) permettant d'associer une touche du clavier en face antérieur à une pluralité de zones de contact en face inférieure (par exemple trois zones de contact). En d'autres termes, le film ITO comprend des circuits imprimés transparents permettant de faire le contact entre le doigt de l'utilisateur et la surface tactile du terminal pour permettre le transport de charge. Ce film ITO est recouvert d'un film PET pour ne pas abimer le film ITO par des utilisations successives.

Les touches sont délimitées par des dents (E30).

### 5.3.2. Procédé de saisie de données

On décrit ci-dessous un procédé de saisie de données sur une dalle tactile d'un terminal en utiliser le dispositif de saisie de données pour les personnes malvoyantes selon le premier mode de réalisation. Le procédé comprend :
- une étape de pose, sur un écran tactile du terminal, d'un dispositif de saisie de données pour les personnes malvoyantes;

Le dispositif peut être posé sur une zone aléatoire de l'écran tactile.
- une étape de saisie, par un utilisateur, de données sur la surface du dispositif de saisie de données ;

L'étape de saisie comprend une étape d'appui une zone du dispositif de saisie de données, à l'emplacement d'une touche.
- une étape de détection d'un motif actionné sur l'écran tactile du terminal.

Selon le deuxième mode de réalisation, lorsque l'utilisateur appuie sur une touche en face supérieure, un motif unique est actionné en face inférieure. Le terminal peut déterminer le caractère ou l'action que la personne malvoyante souhaite entrer. Avec ce mode de saisie de données, il est même envisageable de ne saisir l'information que caractère par caractère, chaque saisie de caractère étant entrecoupée de la reprise en main du dispositif par la personne malvoyante afin de repérer le caractère suivant en tenant le dispositif de saisie dans les deux mains, puis reposer le dispositif sur la dalle tactile une fois que le caractère est identifié, et ainsi de suite jusqu'au dernier caractère à saisir ou à la dernière touche à saisir. Comme le motif géométrique associé à chaque caractère est unique, il importe peu que le dispositif de saisie ne soit pas repositionné au même endroit, sur la dalle tactile, entre deux saisies de caractère. L'application saura tout de même reconnaître ce caractère. Ainsi, le dispositif de saisie de l'invention peut être utilisé de manière polyvalente. Ce qui vient d'être exposé est également vrai avec le dispositif du mode de réalisation, bien que cela puisse nécessiter une phase de détection de la pose du dispositif.

## Revendications

1. Dispositif de saisie de données destiné à être apposé sur une dalle tactile d'un terminal, ledit dispositif de saisie comprenant:
- une plaque sensiblement parallélépipédique, ladite plaque comprenant une face supérieure, dont au moins une partie comprend une matrice de zones de saisie formant un clavier, et une face inférieure, ladite face inférieure comprenant, pour chaque touche dudit clavier en face supérieure, au moins trois zones de contact conductrices électriquement reliées à une touche correspondante dudit clavier en face supérieure, lesdites au moins trois zones de contact conductrices formant, en face inférieure, une forme géométrique unique associée spécifiquement à ladite touche, ledit dispositif de saisie étant **caractérisé en ce qu'**il comprend:
- trois zones de détection, réparties sur le pourtour de la face inférieure dudit dispositif de sorte à former un triangle non isocèle, lesdites zones permettant de détecter la position et l'orientation du dispositif de saisie de données lorsqu'un utilisateur touche soit un élément conducteur lequel est situé au moins en partie sur le pourtour de la face supérieure dudit dispositif, soit la face supérieure qui est conductrice, ledit élément conducteur ou ladite face supérieure étant reliés aux trois zones de détection.

2. Dispositif selon la revendication 1, **caractérisé en ce qu'**il est constitué de matière plastique transparente.

3. Dispositif selon la revendication 1, **caractérisé en ce que** la plaque sensiblement parallélépipédique a une épaisseur comprise entre un et trois millimètres, au sein de laquelle des zones de moindre épaisseur sont pratiquées au niveau des touches.

4. Dispositif selon la revendication 1, **caractérisé en ce qu'**une liaison électrique entre une touche de la surface supérieure et une zone de contact de la surface inférieure est assurée par l'intermédiaire d'une encre conductrice.

5. Dispositif selon la revendication 1, **caractérisé en ce que** l'ensemble de touches formant le clavier est représentatif d'un clavier de saisie d'un code confidentiel sur un terminal de paiement.

6. Système de saisie de données, système comprenant un terminal muni d'un écran tactile, système **caractérisé en ce qu'**il comprend un dispositif de saisie de donnée selon l'une quelconque des revendications 1 à 5.

7. Procédé de saisie de données sur une dalle tactile d'un terminal, procédé de saisie **caractérisé en ce qu'**il comprend :
- une étape de détection, par le terminal, de la pose du dispositif de saisie de données ; selon l'une quelconque des revendications 1 à 5 ;
- postérieurement à l'étape de détection, une étape de basculement dans un mode de saisie adapté audit dispositif de saisie de données, et
- une étape de saisie, par un utilisateur, de données sur la surface dudit dispositif de saisie de données.

## Patentansprüche

1. Dateneingabevorrichtung, bestimmt, um an einem Touchscreen eines Terminals angebracht zu werden, wobei die Eingabevorrichtung umfasst:
- eine im Wesentlichen parallelepipedische Platte, wobei die Platte eine obere Fläche umfasst, von der mindestens ein Teil eine Matrix von Eingabezonen umfasst, die eine Tastatur bilden, und eine untere Fläche, wobei die untere Fläche für jede Taste der Tastatur der oberen Fläche mindestens drei leitfähige Kontaktzonen umfasst, die mit einer entsprechenden Taste der Tastatur der oberen Fläche elektrisch verbunden sind, wobei die mindestens drei leitfähigen Kontaktzonen auf der unteren Fläche eine einzige geometrische Form bilden, die speziell der Taste zugeordnet ist, wobei die Eingabevorrichtung **dadurch gekennzeichnet ist, dass** sie umfasst:
- drei Erfassungszonen, die um den Umfang der unteren Fläche der Vorrichtung angeordnet sind, um ein nicht gleichschenkliges Dreieck zu bilden, wobei die Zonen die Erfassung der Position und der Ausrichtung der Dateneingabevorrichtung ermöglichen, wenn ein Benutzer entweder ein leitfähiges Element berührt, das mindestens teilweise um den Umfang der oberen Fläche der Vorrichtung positioniert ist, oder die obere Fläche, die leitfähig ist, wobei das leitfähige Element oder die obere Fläche mit den drei Erfassungszonen verbunden ist.

2. Vorrichtung nach Anspruch 1, **dadurch gekennzeichnet, dass** sie aus transparentem Kunststoff besteht.

3. Vorrichtung nach Anspruch 1, **dadurch gekennzeichnet, dass** die im Wesentlichen parallelepipedische Platte eine Dicke zwischen einem und drei Millimetern aufweist, innerhalb derer die Zonen mit geringerer Dicke im Bereich der Tasten verwirklicht sind.

4. Vorrichtung nach Anspruch 1, **dadurch gekennzeichnet, dass** eine elektrische Verbindung zwischen einer Taste der oberen Oberfläche und einer Kontaktzone der unteren Oberfläche über eine leitfähige Tinte erfolgt.

5. Vorrichtung nach Anspruch 1, **dadurch gekennzeichnet, dass** die Gesamtheit der Tasten, die die Tastatur bilden, repräsentativ ist für eine Tastatur zur Eingabe eines Geheimcodes an einem Zahlungsterminal.

6. Dateneingabesystem, wobei das System ein Terminal umfasst, das mit einem Berührungsbildschirm ausgestattet ist, wobei das System **dadurch gekennzeichnet ist, dass** es eine Dateneingabevorrichtung nach einem der Ansprüche 1 bis 5 umfasst.

7. Verfahren zur Dateneingabe auf einem Touchscreen eines Terminals, wobei das Eingabeverfahren **dadurch gekennzeichnet ist, dass** es umfasst:
- einen Schritt des Erfassens, durch das Terminal, der Anbringung der Dateneingabevorrichtung nach einem der Ansprüche 1 bis 5;
- nach dem Erfassungsschritt, einen Schritt zum Umschalten in einen Eingabemodus, der für die Dateneingabevorrichtung geeignet ist, und
- einen Schritt zur Eingabe, durch einen Benutzer, von Daten auf der Oberfläche der Dateneingabevorrichtung.

## Claims

1. A data entry device intended to be affixed on a touch panel of a terminal, said entry device comprising:
- a substantially parallelepipedic plate, said plate comprising an upper face, at least a portion of which comprises a matrix of entry areas forming a keyboard, and a lower face, said lower face comprising, for each key of said keyboard on the upper face, at least three conductive contact areas electrically connected to a corresponding key of said keyboard on the upper face, said at least three conductive contact areas forming, on the lower face, a single geometric shape specifically associated with said key, said entry device being **characterized in that** it comprises:
- three detection areas, distributed on the circumference of the lower face of said device so as to form a non-isosceles triangle, said areas allowing detecting the position and the orientation of the data entry device when a user touches either a conductive element which is located at least partially on the circumference of the upper face of said device, or the upper face which is conductive, said conductive element or said upper face being connected to the three detection areas.

2. The device according to claim 1, **characterized in that** it is made of a transparent plastic material.

3. The device according to claim 1, **characterized in that** the substantially parallelepipedic plate has a thickness comprised between one and three millimeters, within which areas of reduced thickness are formed at the keys.

4. The device according to claim 1, **characterized in that** an electrical connection between a key of the upper surface and a contact area of the lower surface is provided by means of a conductive ink.

5. The device according to claim 1, **characterized in that** the set of keys forming the keyboard is representative of a keyboard for entering a confidential code on a payment terminal.

6. A data entry system, the system comprising a terminal provided with a touch screen, the system being **characterized in that** it comprises a data entry device according to any one of claims 1 to 5.

7. A data entry method on a touch panel of a terminal, the entry method being **characterized in that** it comprises:
- a step of detecting, by the terminal, the set-up of the data entry device; according to any one of claims 1 to 5;
- after the detection step, a step of switching to an entry mode adapted to said data entry device, and
- a step of entering, by a user, data on the surface of said data entry device.
